(19) Europäisches Patentamt / European Patent Office / Office européen des brevets

(11) **EP 3 456 686 B1**

(12) **EUROPEAN PATENT SPECIFICATION**

(45) Date of publication and mention
of the grant of the patent:
**02.07.2025 Bulletin 2025/27**

(21) Application number: **18191744.4**

(22) Date of filing: **19.05.2011**

(51) International Patent Classification (IPC):
**C01B 33/193** (2006.01)     **B01J 20/28** (2006.01)
**C09C 1/30** (2006.01)     **B01J 20/10** (2006.01)

(52) Cooperative Patent Classification (CPC):
**B01J 20/28076; B01J 20/103; B01J 20/28016;
B01J 20/28064; B01J 20/28073; C01B 33/193;
C09C 1/3018;** C01P 2006/14; C01P 2006/16;
C01P 2006/19

(54) **POROUS INORGANIC OXIDE PARTICLES AND METHODS OF MAKING AND USING THE SAME**

PORÖSE ANORGANISCHE OXIDPARTIKEL UND VERFAHREN ZUR HERSTELLUNG UND VERWENDUNG DAVON

PARTICULES D'OXYDE INORGANIQUE POREUSES ET LEURS PROCÉDÉS DE FABRICATION ET D'UTILISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.05.2010 US 34707610 P**

(43) Date of publication of application:
**20.03.2019 Bulletin 2019/12**

(62) Document number(s) of the earlier application(s) in
accordance with Art. 76 EPC:
**11721235.7 / 2 571 808**

(73) Proprietor: **Grace GmbH
67545 Worms (DE)**

(72) Inventors:
• **KRETZSCHMAR, Markus
67122 Altrip (DE)**
• **HERRIG, Horst
67295 Bolanden (DE)**

(74) Representative: **Uexküll & Stolberg
Partnerschaft von
Patent- und Rechtsanwälten mbB
Beselerstraße 4
22607 Hamburg (DE)**

(56) References cited:
WO-A1-03/055802          WO-A2-2004/073539
DE-A1- 102008 017 747     US-A- 5 643 624
US-A1- 2008 153 694       US-A1- 2008 160 053
US-A1- 2010 083 876       US-B2- 7 566 433

**Description**

FIELD OF THE INVENTION

The present invention is directed to porous silica particles, compositions containing porous silica particles, methods of making porous silica particles, and methods of using porous silica particles.

BACKGROUND OF THE INVENTION

US 5 643 624 A discloses a process for treating beer or other alcoholic fermented beverage to stabilize the beverage and reduce haze on storage which comprises contacting said beer or other beverage with a precipitated amorphous silica having i) a pore volume in the range from 1.6 to 2.5 $cm^3/g$, ii) a mean pore diameter in the range from 8.0 to 20.0 nm, iii) a surface area from at least 665 to 830 $m^2/g$, iv) an oil absorption in the range from 250 to 350 $cm^3/100g$, v) a structural bound water content of at least 5 % w/w, vi) a free moisture content of less than 25 % w/w, vii) an average particle size of 5 to 30 $\mu$m, viii) less than 20 ppm of beer solution iron, and ix) a D SASAPL value of 1.2 to 1.5 ml. The last step of the silica production process is that the obtained silica particles are comminuted to the desired particle size. Further, US 2008/0153694 A1 discloses amorphous silica particles having an DBP oil absorption of more than 260 ml/100 g and a BET of 50 to 800 $m^2/g$. Efforts continue in the art to further develop porous inorganic oxide particles, such as silica particles, having a desired combination of properties. For example, efforts continue to develop porous inorganic oxide particles, such as silica particles, having a desired average particle size and/or a desired particle size distribution; an increased BET surface area relative to known porous inorganic oxide particles; an increased oil absorption value, such as a DOA oil absorption value, relative to known porous inorganic oxide particles; an increased pore volume relative to known porous inorganic oxide particles; an increased particle stability relative to known porous inorganic oxide particles; or any combination of the above-referenced properties.

SUMMARY OF THE INVENTION

The present invention addresses some of the difficulties and problems discussed above by the discovery of porous silica particles having a combination of properties that were previously unknown to similar porous silica particles. The present invention provides porous silica particles as defined in claim 1.

The porous silica particles of the present invention comprise (a) a single point nitrogen adsorption surface area of at least 650 $m^2/g$; (b) a DOA oil absorption number of at least 260 ml/100 g, and (c) a particle stability of at least about 90% as measured via the Particle Stability Test method, the particle stability index being the quotient of the median particle size from 2 particle size measurements on the same sample according to ISO/FSD 13320-1, and the sample preparation is conducted with two different intensities of ultrasonic pretreatment, wherein 1 g of silica is put into a 150 ml beaker, 100 to 120 ml of deionized water is added thereto, the tip of the ultrasonic resonator is immersed 2 cm into the fluid and in the center of the beaker, the sonification is conducted with a power setting of 55% for 10 s for measurement 1 and 60 s for measurement 2, and the particle stability index is calculated as follows: Stability Index [%] = $(d0.5_{60s})/(d0.5_{10s}) * 100$.

In some exemplary embodiments, the porous silica particles of the present invention possess a porosity such that at least 0.5 $cm^3/g$ of pore volume, as measured by BJH nitrogen porosimetry, stems from pores having a pore size of 10 nm (100Å) or smaller, wherein the porosity of the particles is measured after drying the particles at 200°C for at least 2 hours followed by an activation at 200°C for two hours under vacuum. In other exemplary embodiments, the porous silica particles of the present invention possesses a porosity such that at least 0.6 $cm^3/g$ of pore volume, as measured by BJH nitrogen porosimetry, stems from pores having a pore size of 16 nm (160Å) or smaller, wherein the porosity of the particles is measured after drying the particles at 200°C for at least 2 hours followed by an activation at 200°C for two hours under vacuum.

The present application also discloses methods of making porous silica particles having a desired combination of particle properties.

The method of making porous silica particles comprises the steps of introducing silica particle-forming reagents into a reaction vessel, while mixing under high shear, for a first length of time so as to result in a first reaction mixture; following the first length of time, halting introduction of silica particle-forming reagents into the reaction vessel while continuing the mixing under high shear for a second length of time; following the second length of time, introducing the silica particle-forming reagents into the reaction vessel, while mixing under high shear, for a third length of time so as to result in a second reaction mixture; following the third length of time, acidifying the second reaction mixture so as to reduce the pH of the second reaction mixture to 4.0 resulting in a third reaction mixture; separating precipitated silica particles from the third reaction mixture; washing the precipitated silica particles to produce washed precipitated silica particles; and drying the washed precipitated silica particles to form dried porous silica particles.

The present invention is further directed to methods of using porous silica particles. In exemplary methods of using porous silica particles, the method comprises utilizing finished (e.g., milled) porous silica particles, formed by the disclosed methods, in a given application (e.g., as a matting agent, as a filtering agent in beer stabilization, as a free flow agent).

These and other features and advantages of the present invention will become apparent after a review of the following detailed description of the disclosed embodiments and the appended claims.

BRIEF DESCRIPTION OF THE FIGURES

FIG. 1 depicts a block diagram of an exemplary process for forming porous silica particles of the present invention; and

FIG. 2 depicts a schematic diagram of an exemplary apparatus for forming porous silica particles of the present invention.

DETAILED DESCRIPTION OF THE INVENTION

To promote an understanding of the principles of the present invention, descriptions of specific embodiments of the invention follow and specific language is used to describe the specific embodiments. It will nevertheless be understood that no limitation of the scope of the invention is intended by the use of specific language. Alterations, further modifications, and such further applications of the principles of the present invention discussed are contemplated as would normally occur to one ordinarily skilled in the art to which the invention pertains.

It must be noted that as used herein and in the appended claims, the singular forms "a", "and", and "the" include plural referents unless the context clearly dictates otherwise. Thus, for example, reference to "an oxide" includes a plurality of such oxides and reference to "oxide" includes reference to one or more oxides and equivalents thereof known to those skilled in the art, and so forth.

As used herein, the term "high shear" means a stress which is applied parallel or tangential to a face of a material, as opposed to a normal stress which is applied perpendicularly. A high shear mixer uses a rotating impeller or high speed rotor, or a series of such impellers or inline rotors, usually powered by an electric motor, to "work" the fluid, creating flow and shear. The velocity, or tip speed of the fluid at the outside diameter of the rotor will be higher than the velocity at the centre of the rotor, and it is this that creates shear. Tip speeds above 20 m/s typically provide high shear conditions, but liquid viscosities and mixer design will also affect shear conditions.

As used herein, the term "inorganic oxide" is defined as binary oxygen compounds where metal is the cation and the oxide is the anion. The inorganic oxides of the present invention is silica.

As used herein, the term "particle" or "particulate" refers to porous or nonporous particles formed via any known process including, but not limited to, a solution polymerization process such as for forming colloidal particles, a continuous flame hydrolysis technique such as for forming fused particles, a gel technique such as for forming gelled particles, and a precipitation technique such as for forming precipitated particles, or combinations of thereof. The particles may be a variety of different symmetrical, asymmetrical or irregular shapes, including chain, rod or lath shape. The particles may have different structures including amorphous or crystalline, etc. The particles may include mixtures of particles comprising different compositions, sizes, shapes or physical structures, or that may be the same except for different surface treatments, which render them hydrophobic. Preferably, the silica particles are amorphous.

As used herein, the term "particle stability" means the measure of particle deagglomeration under shear force pursuant to the Particle Stability Test referenced herein.

As used herein, the term "pore size" means the diameter of the pores.

As used herein the term "porous particles" means particles having significant internal porosity as measured by nitrogen porosimetry, i.e., a porosity of more than 0.05 cm$^3$/g, and the term "non-porous" means particles having little or no internal porosity, i.e., an internal porosity of less than 0.05 cm$^3$/g. Examples of porous particles include, silica gel, precipitated silica, fumed silica, and examples of non-porous particles include colloidal silica.

As used herein, the term "substantially" means within a reasonable amount, but includes amounts which vary from 0% to 50% of the absolute value, from 0% to 40%, from 0% to 30%, from 0% to 20% or from 0% to 10%.

As used herein, the term "rapid drying" means accelerated drying of newly formed silica particles that may be performed by equipment with evaporative capacities of from 200 to 800 kg/(m$^2$/h). Rapid drying is typically performed in less than two minutes such that the particles possess a moisture level of less than 10% by weight of the particle, and even less than 5% by weight of the particle.

The present invention is directed to porous silica particles. The present application further discloses methods of making porous silica particles, as well as methods of using porous silica particles. A description of exemplary porous silica particles, exemplary methods of making porous silica particles, and exemplary methods of using porous silica particles is provided below.

I. Porous Silica Particles

The porous silica particles of the present invention have a physical structure and properties that enable the porous silica particles to provide one or more advantages when compared to known precipitated porous silica particles.

The porous silica particles of the present invention may be characterized as "finished" particles. As used herein, the term "semi-finished particles" refers to un-milled particles, namely, particles that are not further processed following formation (discussed below). As used herein, the term "finished particles" refers to milled or classified particles, namely, particles that are milled and/or classified following a drying step. As discussed further below, the disclosed methods of making porous silica particles provide a unique property set for "finished" particles of the present invention, which enable the "finished" particles to be suitable for use in a variety of applications (as discussed further below).

The porous silica particles of the present invention may have any shape, which depends upon the method of particle formation. For example, if the particles are formed by spray drying, they may be spherical, and when formed by other means, may be irregular. In one exemplary embodiment, the particles of the present invention have an irregular particle shape with an average largest particle dimension (i.e., a largest length, width or diameter dimension). In one exemplary embodiment, the semi-finished porous silica particles have an average largest particle dimension of less than 50 microns ($\mu$m), more typically, less than 30 $\mu$m. In another exemplary embodiment, the semi-finished porous silica particles have an average largest particle dimension of from 15 $\mu$m to 30 $\mu$m, and even from 18 $\mu$m to 25 um. In some embodiments the particle size distribution of the semi-finished particles may range from 1 to 300 microns, and even from 1 to 200 microns.

Semi-finished particles of the present invention are milled and/or classified to form "finished" particles having a desired average particle size and particle size distribution. In one exemplary embodiment, the finished porous silica particles of the present invention have an average largest particle dimension of less than 30 microns ($\mu$m), more typically, less than 20 $\mu$m. In another exemplary embodiment of the present invention, the finished porous silica particles have an average largest particle dimension of from 1 $\mu$ to 20 $\mu$m, and even from 3 $\mu$m to 15 $\mu$m. In some embodiments the particle size distribution of the finished particles may range from 0.1 to 100 microns, and even from 0.1 to 50 microns.

The porous silica particles of the present invention typically have an aspect ratio of less than 1.4 as measured, for example, using Transmission Electron Microscopy (TEM) techniques. As used herein, the term "aspect ratio" is used to describe the ratio between (i) the average largest particle dimension of the porous silica particles and (ii) the average largest cross-sectional particle dimension of the porous silica particles, wherein the cross-sectional particle dimension is substantially perpendicular to the largest particle dimension of a given porous silica particle. In some embodiments of the present invention, the porous silica particles have an aspect ratio of less than 1.3 (or less than 1.2, or less than 1.1, or less than 1.05). In another embodiment, the porous inorganic silica has an aspect ratio of from 1.0 to 12.

The finished particles of the present invention have a particle stability of at least 90% as measured via the Particle Stability Test method described below. In other embodiments, finished particles of the present invention have a particle stability of at least 95% (or at least 96%, or at least 97%, or at least 98%, or at least 99%) as measured via the Particle Stability Test method.

The porous silica particles of the present invention (i.e., the finished particles) have a specific surface area, as measured by the single point nitrogen adsorption method, of at least 650 m$^2$/g. In some exemplary embodiments, the porous particles have a specific surface area of from 650 to 1000 m$^2$/g. In other exemplary embodiments, the porous silica particles have a specific surface area of from 660 to 900 m$^2$/g, or even from 670 to 890 m$^2$/g.

The porous silica particles of the present invention (i.e., the finished particles) also have a DOA oil absorption number of at least 260 ml/100 g. In some exemplary embodiments, the porous silica particles have a DOA oil absorption number of from 260 to 400 ml/100 g. In other exemplary embodiments, the porous silica particles have a DOA oil absorption number of from 260 to 380 ml/100 g.

The porous silica particles of the present invention (i.e., the finished particles) have a specific surface area, as measured by the single point nitrogen adsorption method, of at least 650 m$^2$/g and a DOA oil absorption number of at least 260 ml/100 g. In some exemplary embodiments, the porous silica particles have a specific surface area of from 650 to 1000 m$^2$/g and a DOA oil absorption number of from 260 to 400 ml/100 g. In other exemplary embodiments, the porous silica particles have a specific surface area of from 660 to 900 m$^2$/g, or even from 670 to 890 m$^2$/g and a DOA oil absorption number of from 260 to 380 ml/100 g.

In further exemplary embodiments, the finished particles of the present invention may have a porosity such that at least 0.5 cm$^3$/g of pore volume, as measured by BJH nitrogen porosimetry, is from pores having a pore size of 10 nm (100 Å) or smaller, wherein the porosity of the particles is measured after drying the particles at 200°C for at least 2 hours followed by an activation at 200°C for two hours under vacuum. In some exemplary embodiments, the finished particles may have a porosity such that at least 0.6 cm$^3$/g of pore volume, as measured by BJH nitrogen porosimetry, is from pores having a pore size of 10 nm (100 Å) or smaller, wherein the porosity of the particles is measured after drying the particles at 200°C for at least 2 hours followed by an activation at 200°C for two hours under vacuum. In other exemplary embodiments, the finished particles possess a total porosity of at least 1.5 cm$^3$/g of pore volume, at least 1.6 cm$^3$/g of pore volume, at least 1.7 cm$^3$/g of pore volume, at least 1.8 cm$^3$/g of pore volume, at least 1.9 cm$^3$/g of pore volume, or even at least 2.0 cm$^3$/g of pore volume, as measured by BJH nitrogen porosimetry. In even further exemplary embodiments, the finished particles possess a total porosity of 1.5 cm$^3$/g of pore volume to 4.0 cm$^3$/g of pore volume, or 1.7 cm$^3$/g of pore volume to 3.0 cm$^3$/g of pore volume, as measured by BJH nitrogen porosimetry.

In further exemplary embodiments, the finished particles of the present invention may have a porosity such that at least 0.6 cm$^3$/g of pore volume, as measured by BJH nitrogen porosimetry, is from pores having a pore size of 16 nm (160 Å) or smaller, wherein the porosity of the particles is measured after drying the particles at 200°C for at least 2 hours followed by an activation at 200°C for two hours under vacuum. In some exemplary embodiments, the finished particles may have a porosity such that at least 0.7 cm$^3$/g of pore volume, as measured by BJH nitrogen porosimetry, is from pores having a pore size of 16 nm (160 Å) or smaller, wherein the porosity of the particles is measured after drying the particles at 200°C for at least 2 hours followed by an activation at 200°C for two hours under vacuum.

II. Methods of Making Porous Silica Particles

The present application also describes methods of making porous silica particles. Raw materials used to form the porous silica particles of the present invention, as well as method steps for forming the porous silica particles of the present invention are discussed below.

A. Raw Materials

The methods of making porous silica particles of the present invention may utilize a number of porous silica particle-forming raw materials. Suitable silica particle-forming raw materials include, but are not limited to, alkali metal silicate (often mentioned in the literature as water glass), and sulfuric acid. Any commercially available water glass and sulfuric acid may be used in the present invention. In one exemplary embodiment, water glass, commercially available under the trade designation Sodium Silicate 38/40 from Woellner GmbH&Co.KG, Ludwigshafen, Germany, is used to form porous silica particles. Alternately, the alkali metal silicate used for making the silicas may be made by reaction of silicon dioxide and alkali metal carbonate when molten to form alkali metal silicate and carbon dioxide. The resulting alkali metal silicate is typically, after being cooled from the melt, in solid lump form, but it may be converted to powder form, or even into an aqueous solution.

B. Process Steps

The porous silica particles of the present invention are typically prepared using a multi-step precipitation process, wherein porous silica particles are precipitated under high shear, filtered to remove the porous silica particles from the reaction slurry, washed as a crude filter cake to remove reaction residues, and then rapidly dried directly from the filter cake without the need for re-slurrying the particles. It has been discovered that the rapid drying step is of particular importance in controlling the pore structure of the resulting particles. The resulting porous silica particles then are sized (e.g., milled) to an appropriately narrow particle size distribution by various means (e.g., mechanical classifier milling or fluid energy milling).

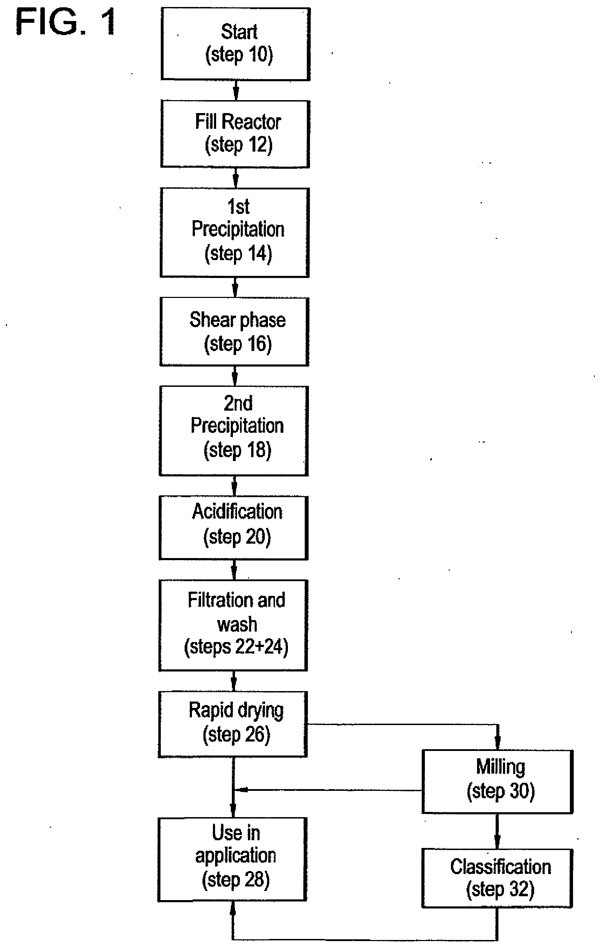

FIG. 1 depicts a block diagram of an exemplary process for forming porous silica particles of the present invention. As shown in FIG. 1, exemplary process 100 begins at start block 10, and proceeds to a reactor fill step 12. In this step, a reactor vessel is filled with water (e.g., process or de-ionized water), which may be at a temperature of 40°C.

From step 12, exemplary process 100 proceeds to a first precipitation step 14. In first precipitation step 14, silica particle-forming reagents are introduced into the reaction vessel, while mixing under high shear. The silica particle-forming reagents are independently fed into the reaction vessel at controlled feed rates, concentrations and temperatures for a first length of time so as to result in a first reaction mixture. Typically, the first length of time is less than 20 minutes, and more typically, between 10 and 15 minutes. Desirably, mixing under high shear (e.g., up to 23 m/s nominal mixer tip speed) throughout exemplary process 100 comprises utilizing a high shear disintegrator (e.g., a DISPAX Reactor from IKA Works (Wilmington, NC)) in a bypass mode to circulate the silica particle-forming reagents (and precipitated particles) through the reaction vessel and the high shear disintegrator. It is believed (without being bound therewith to any particular theory) that the use of the high shear mixing during the first precipitation step allows for control the particle size in the slurry at this stage of the reaction leading to, or at least supporting, the resulting desirable properties of the present invention particles.

From step 14, exemplary process 100 proceeds to a shear phase step 16, wherein introduction of silica particle-forming reagents into the reaction vessel is halted, and mixing under high shear continues for a second length of time. Typically, the second length of time is less than 120 minutes, and more typically, between 75 and 100 minutes. It is also believed (without being bound therewith to any particular theory) that the use of the high shear mixing during the shear phase step allows for control the particle size in the slurry at this stage of the reaction leading to, or at least supporting, the resulting desirable properties of the present invention particles.

From step 16, exemplary process 100 proceeds to a second precipitation step 18. As in first precipitation step 14, in second precipitation step 18, the silica particle-forming reagents are again independently fed into the reaction vessel at controlled feed rates and concentrations under use of high shear mixing for a third length of time so as to result in a second reaction mixture. Typically, the third length of time is less than 60 minutes, and more typically, between 30 and 45 minutes. It is further believed (without being bound therewith to any particular theory) that the use of the high shear mixing during the second precipitation step allows for control the particle size in the slurry at this stage of the reaction leading to, or at least supporting, the resulting desirable properties of the present invention particles.

From step 18, exemplary process 100 proceeds to an acidification step 20, wherein acid is introduced into the second reaction mixture so as to reduce the pH of the second reaction mixture to 4.0 resulting in a third reaction mixture. Following step 20, exemplary process 100 proceeds to a filtration step 22, wherein precipitated silica particles are physically separated from the liquid of the third reaction mixture, using suitable filtration equipment (e.g. drum filter, belt filter, filter press, membrane filter).

From step 22, exemplary process 100 proceeds to a washing step 24, wherein the precipitated silica particles are washed with water (e.g., process or de-ionized water) resulting in washed precipitated silica e particles in the form of a filter cake. Alternatively, steps 22 and 24 may be performed on the same device in one operating step. From step 24, exemplary process 100 proceeds to a rapid drying step 26, wherein the washed precipitated silica particles filter-cake is rapidly dried without prior re-slurrying to form dried porous silica particles.

Rapid drying step 26 typically comprises the following sequence of drying steps. In one exemplary rapid drying step 26, washed precipitated silica particles (i.e., filter-cake) are subjected to a rapid drying temperature ranging from 300 to 800°C, or 400 to 700°C, for a rapid drying period of less than 5 minutes, or 4 minutes, or 3 minutes, or 2 minutes, or even less than 1 minute.

Unlike known spray-drying techniques, rapid drying step 26 is suitable for drying washed precipitated silica particles without the need for one or more re-slurrying steps required in known spray-drying techniques, which makes the processing considerably more economic since this eliminates raw material costs, processing time, and energy costs (due to reduced water evaporation effort required per kg of product produced). Washed precipitated silica particles (filter-cake) proceed directly to a dryer in rapid drying step 26 from washing step 24.

From step 26, exemplary process 100 proceeds to a milling step 30, wherein the dried precipitated inorganic oxide particles are milled to a desired size. In one exemplary embodiment, milling step 30 results in milled dried porous inorganic oxide particles (i.e., finished particles) having an average particle size ranging from about 1 to about 30 microns.

From milling step 30, exemplary process 100 may proceed to an optional classifying step 32, wherein the milled particles are separated by particle size to produce a plurality of milled particles having a relatively narrow particle size distribution. From step 32, exemplary process 100 proceeds to step 28, wherein the resulting dried inorganic oxide particles (i.e., the finished particles) are used in a given application. In an especially preferred embodiment of the invention, the milling and the classifying step are performed on the same equipment (a so called classifier mill). The semi-finished product may also be classified using a sifter without an upstream comminution process.

In some desired embodiments, milling step 30 comprises subjecting the dried porous inorganic oxide particles to a fluid energy milling step so as to form finished porous inorganic oxide particles having an average particle size ranging from about 1 to about 25 microns, and a particle size distribution ranging from less than 1 to about 50 microns. Following the milling step 30, the particles may be packaged for shipment or mixed with various components depending upon the application or formulation desired. Alternatively, the particles may be further processed by surface treating the particles with an organic coating, such as wax, silane, etc. Such treatments are described in DE 1 006 100, DE 1 592 865, US 5,221,337 and US 6,294,505.

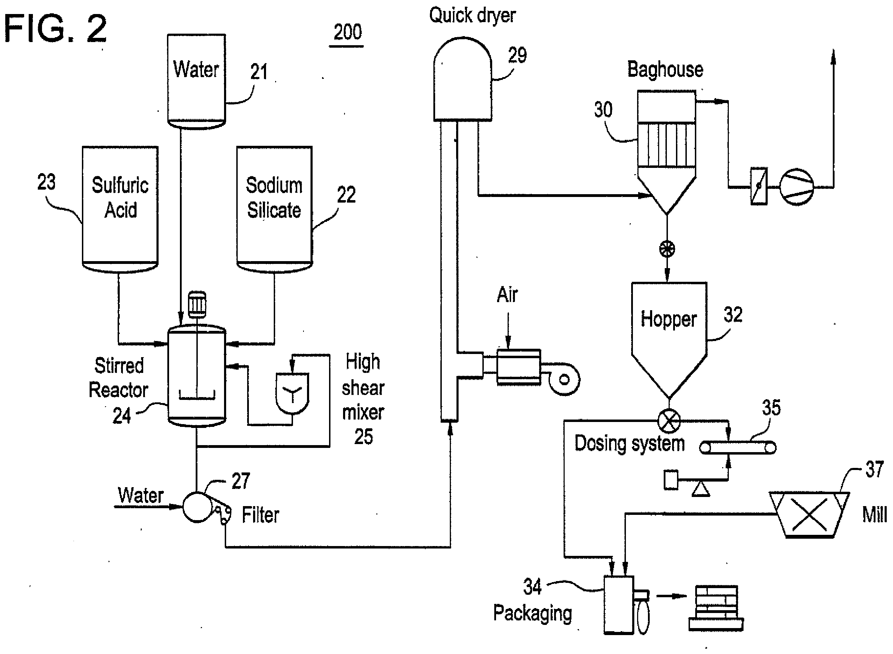

FIG. 2 depicts a schematic diagram of an exemplary process for forming porous silica particles of the present invention. As shown in FIG. 2, tanks 21, 22, and 23 feed raw materials, such as water sulfuric acid and sodium silicate, into reactor 24. A high shear mixer 25 provides shear on the contents of the reactor 24. Following the reaction, silica particles that have been formed are sent to belt filter 27 where they are drained and/or filtered and washed, which forms a filter cake. Subsequently, the filter cake is moved to the rapid dryer 29, where the particles are dried over a short period of time such that the moisture level of the particles are less than 10% by weight based upon the weight of the particles. The gas stream exiting the dryer 29 is directed to a baghouse 30 where the particles are collected and subsequently sent to a hopper 32 where the particles are classified, such as by use of a sifter (not shown) and sent to a packaging station 34 or sent to a mill 37 via dosing system 35. After milling, the particles may be sent to packing station 34.

III. Methods of Using Porous Silica Particles

The present invention is further directed to methods of using porous silica particles. In some exemplary methods of using porous silica inorganic oxide particles, the methods comprise utilizing finished (e.g., milled particles undergoing at least one milling step after exiting the dryer) porous silica particles, formed by the disclosed methods, in a given application.

Applications in which finished porous silica particles may be used include, but are not limited to, utilizing the finished particles as a matting agent in various coatings, antiblock agents in plastic films, fillers in polymers, thickeners in liquids, abrasives or thickeners in toothpastes, additives in cosmetic formulations, filtering agents in beer stabilization or edible oil purification.

In other exemplary embodiments, methods of using porous silica particles of the present invention may comprise utilizing the porous silica particles in applications including, but not being limited to, as a filler/reinforcing material in rubber, tires, shoe soles; as anti-caking additive or free flow agent in powdered or liquid materials (e.g., cosmetics, salts and foods); as a filler material in adhesives, paints and colorants, health care products such as toothpaste, other pastes, ointments and cosmetics, and pharmaceuticals.

The present invention is further illustrated by the following examples, which are not to be construed in any way as imposing limitations upon the scope thereof.

EXAMPLES

The following materials and test methods were used in the examples below.

Materials:

The following materials were used in the examples.

**Table 1. Materials**

| Material | Product Name | Source |
|---|---|---|
| sulfuric acid | Sulfuric Acid | Th. Goldschmidt AG, Essen, Germany |
| water glass liquid | Sodium Silicate 38/40 | Woellner GmbH&Co.KG, Ludwigshafen, Germany |
| water | Process water | Deep well |

Test Methods:

Particle Size Test Method

The average particle size of a plurality of particles is determined using the particle size test method as described in ISO/FSD 13320-1.

Particle Single Point Nitrogen Adsorption Surface Area Test Method

The average surface area of a plurality of particles is determined as described in ISO 5794-1:2005.

DOA Oil Absorption Test Method

The oil absorption of a plurality of particles is determined using the oil absorption test method as described in ASTM D 2414 Method B, with the use of DOA (dioctyladipate) as the penetrating oil.

Particle Stability Test Method

In this test, a plurality of semi-finished particles are tested for their stability after milling. The particle stability index is the quotient of the median particle size from 2 particle size measurements on the same sample according to ISO/FSD 13320-1. Sample preparation is conducted with two different intensities of ultrasonic pretreatment. About 1 g of silica is put into a 150 ml beaker and 100 to 120 ml of deionized water is added thereto. The tip of the ultrasonic resonator (Branson Sonifier W250D) is immersed 2 cm into the fluid and in the center of the beaker. The sonification is conducted with a power setting of 55% for 10 s for measurement 1 and 60 s for measurement 2.

The particle stability index is calculated as follows:

$$\text{Stability Index } [\%] = (d0.5_{60s})) / (d0.5_{10s}) * 100$$

Particle Pore Volume Test Method

The average pore volume of a plurality of particles is determined using the BJH nitrogen porosimetry as described in DIN 66134.

EXAMPLE 1 - Preparation of Porous Semi-Finished Silica Particles

A reaction vessel was filled with 175.5 liter of distilled deionized (via ionexchange) water having a temperature of 40°C. The reaction vessel was in fluid communication with a DISPAX™ reactor (i.e., an inline, high shear disintegrator commercially available under the trade designation DISPAX™ Reactor DR2000 from DCA Works (Wilmington, NC)). The DISPAX™ Reactor DR2000 was operating in a bypass mode using the following settings: tip speed 23 m/s, flow rate = 25001/h.

In a first precipitation step, $H_2SO_4$ (97%) and WGL38/40 were simultaneously fed into the system while mixing under high shear. 1150g of $H_2SO_4$ (97%) was fed into the system at a feed rate of 88.5 g/min. 8437g of WGL38/40 was fed into the system at a feed rate of 649 g/min. The reactants are added at room temperature and the reactor is maintained at atmospheric pressure.

Once the 1150g of $H_2SO_4$ (97%) and the 8437g of WGL38/40 were in the system, the reaction mixture was circulated through the system, under high shear, at a flow rate of 25001/h for a period of 90 minutes (i.e., the shear phase).

Following the shear phase, a second precipitation step was initiated. In the second precipitation step, 3805g of $H_2SO_4$ (97%) was fed into the system at a feed rate of 88.5 g/min, while 27907g of WGL38/40 was simultaneously fed into the system at a feed rate of 649 g/min.

Once the additional 3805g of $H_2SO_4$ (97%) and the additional 27907g of WGL38/40 were in the system, the pH of the reaction mixture was reduced, under high shear, to a pH of 4.0. The resulting acidified reaction mixture was filtered using a membrane filter press to separate precipitated silica particles from the acidified reaction mixture. The separated precipitated silica particles were washed and then introduced into a dryer (Lab Scale Flash Drier), commercially available under the trade designation Anhydro from Soeborg, Denmark, and rapidly dried at 350°C so that the particles possessed less than 10% moisture based upon the weight of the particles. The particles of Sample 1 have an average particle size of 11.7 microns. The particles of Sample 2 have an average particle size of 23.7 microns. The particles of Sample 3 have an average particle size of 12.9 microns. For Sample 4, a semi-finished precipitated silica was selected (after milling is commercially available from Grace GmbH & Co. KG as Perkasil®KS408 silica).

The resulting semi-finished silica particles were tested to determine average particle size, and particle stability using the above-described test methods. The results are provided in Table 2 below.

**Table 2. Semi-Finished Silica Particle Properties**

| Sample | Average Particle Size (μm) | Average Particle Stability |
|--------|----------------------------|----------------------------|
| 1 | 11.7 | 91% |
| 2 | 23.7 | 99% |
| 3 | 12.9 | 81% |
| 4 | 36.4 | 51% |

As is apparent from Table 2, the average Particle Stability is quite high for Sample 1-3, whereas the average Particle Stability for Sample 4 is quite low.

EXAMPLE 2 - Preparation of Porous Finished Silica Particles

The semi-finished silica particles formed in Example 1 were subjected to a fluid energy milling step as follows. The semi-finished silica from Example 1 is fed into an air jet mill available from Netzsch-Condux Mahltechnik GmbH at a rate of 250 kg/h. The mill is operated at an air flow rate of 400 $m^3$/h and a temperature above 200 degrees centigrade, and the particles are milled until the average particle size is less than 10 microns. The particles are collected in a baghouse and their properties measured. Acematt HK400, available from Evonik Industries, is used as a comparison Sample 8.

The resulting finished silica particles were tested to determine average particle size, single point nitrogen adsorption surface area, DOA oil absorption number, and pore volume using the above-described test methods. The results are provided in Table 3 below.

**Table 3. Finished Silica Particle Properties**

| Sample | Average Particle Size ($\mu$m) | Surface Area (m$^2$/g) | DOA Oil Absorption (ml/100g) | Pore Volume (cc/g) |
|---|---|---|---|---|
| 5 | 8.9 | 853 | 321 | 1.95 |
| 6 | 5.9 | 853 | 351 | 1.95 |
| 7 | 5.2 | 805 | 295 | 2.03 |
| 8 | 5.2 | 226 | 270 | 1.90 |

As is apparent from Table 3, the average single point surface area and DOA oil adsorption are quite high for Sample 5-7, whereas the single point surface area and DOA oil adsorption are much lower for Sample 8.

EXAMPLE 3 - Preparation of Porous Finished Silica Particles

The semi-finished silica particles formed in Example 1 were subjected to a mechanical classifier milling step as follows. The semi-finished silica from Example 1 is fed into a CSM classifier mill available from Netzsch-Condux Mahltechnik GmbH at a rate of 750kg/h. The mill is operated at maximum circumferential speed and the particles are milled until the average particle size is less than 10 microns. The particles are collected in a baghouse and their properties measured. Lovel 600, available from PPG Industries, is used as a comparison Sample 12.

The resulting finished silica particles were tested to determine average particle size, single point nitrogen adsorption surface area, DOA oil absorption number, and pore volume using the above-described test methods. The results are provided in Table 4 below.

**Table 4. Finished Silica Particle Properties**

| Sample | Average Particle Size ($\mu$m) | Surface Area (m$^2$/g) | DOA Oil Absorption (ml/100g) | Pore Volume (cc/g) |
|---|---|---|---|---|
| 9 | 9.2 | 785 | 325 | 1.91 |
| 10 | 9.1 | 734 | 314 | 1.83 |
| 11 | 9.5 | 757 | 330 | 1.82 |
| 12 | 10.4 | 660 (BET) | 250 | 1.70 |

As is apparent from Table 4, the average single point surface area and the DOA oil adsorption number are quite high for Sample 9-11, whereas the single point surface area and the DOA oil adsorption number are much lower for Sample 12.

All parts and percentages in the examples, as well as in the remainder of the specification, are by weight unless otherwise specified. Further, any range of numbers recited in the specification or claims, such as that representing a particular set of properties, units of measure, conditions, physical states or percentages, is intended to literally incorporate expressly herein by reference or otherwise, any number falling within such range, including any subset of numbers within any range so recited. For example, whenever a numerical range with a lower limit, RL, and an upper limit Ru, is disclosed, any number R falling within the range is specifically disclosed. In particular, the following numbers R within the range are specifically disclosed: $R = R_L + k(R_U - R_L)$, where k is a variable ranging from 1% to 100% with a 1% increment, e.g., k is 1%, 2%, 3%, 4%, 5%.... 50%, 51%, 52%.... 95%, 96%, 97%, 98%, 99%, or 100%. Moreover, any numerical range represented by any two values of R, as calculated above is also specifically disclosed.

**Claims**

1.   Porous silica particles formed by a method comprising the steps of:

forming precipitated silica particles within a reaction mixture while mixing under high shear conditions;
separating the precipitated silica particles from liquid within the reaction mixture;
washing the precipitated silica particles to produce washed precipitated silica particles; and
rapid drying the washed precipitated silica particles to form dried porous silica particles,
wherein said forming step comprises:

introducing silica particle-forming reagents into a reaction vessel, while mixing under high shear conditions, for a first length of time so as to result in a first reaction mixture;

following the first length of time, halting introduction of silica particle-forming reagents into the reaction vessel while continuing said mixing under high shear dispersion force for a second length of time;

following the second length of time, introducing the silica particle-forming reagents into the reaction vessel, while mixing under high shear, for a third length of time so as to result in a second reaction mixture; and following the third length of time, acidifying the second reaction mixture under high shear dispersion force so as to reduce a pH of the second reaction mixture to about 4.0 resulting in a third reaction mixture, wherein the first length of time is less than 15 minutes, the second length of time is less than 120 minutes, and the third length of time is less than 45 minutes, and

wherein the method further comprises

milling or classifying said dried porous silica particles to form porous silica particles having an average particle size ranging less than 30 microns,

said milled or classified silica particles having:

(a) a single point nitrogen adsorption surface area of at least 650 $m^2$/g;
(b) a DOA oil absorption number of at least 260 ml/100g, and
(c) a particle stability of at least about 90% as measured via the Particle Stability Test method, the particle stability index being the quotient of the median particle size from 2 particle size measurements on the same sample according to ISO/FSD 13320-1, and the sample preparation is conducted with two different intensities of ultrasonic pretreatment, wherein 1 g of silica is put into a 150 ml beaker, 100 to 120 ml of deionized water is added thereto, the tip of the ultrasonic resonator is immersed 2 cm into the fluid and in the center of the beaker, the sonification is conducted with a power setting of 55% for 10 s for measurement 1 and 60 s for measurement 2, and the particle stability index is calculated as follows:

$$\text{Stability Index } [\%] = (d0.5_{60s}))/(d0.5_{10s}) * 100.$$

2. The silica particles of claim 1, said silica particles having a porosity such that at least 0.5 $cm^3$/g of pore volume, as measured by BJH nitrogen porosimetry, is from pores having a pore size of 10 nm (100 Å) or smaller, wherein the porosity of the particles is measured after drying the particles at 200°C for at least 2 hours followed by an activation at 200°C for two hours under vacuum.

3. The silica particles of claim 1, said silica particles having a median particle size in the range of 1 to 30 microns.

4. The silica particles of claim 3, wherein the particles comprise:

(a) a single point nitrogen adsorption surface area of from 650 to 1000 $m^2$/g; and
(b) a DOA oil absorption number of from 260 to 400 ml/100g.

5. The silica particles of claim 3, wherein the particles comprise:

(a) a single point nitrogen adsorption surface area of from 660 to 900 $m^2$/g; and
(b) a DOA oil absorption number of from 260 to 380 ml/100g.

6. The silica particles of claim 3, wherein the particles comprise a porosity such that at least 0.6 $cm^3$/g of pore volume, as measured by BJH nitrogen porosimetry, is from pores having a pore size of 16 nm (160 Å) or smaller, wherein the porosity of the particles is measured after drying the particles at 200°C for at least 2 hours followed by an activation at 200°C for two hours under vacuum.

7. The silica particles of claim 6, wherein the particles comprise a total porosity of at least 1.5 $cm^3$/g of pore volume, as measured by BJH nitrogen porosimetry.

8. The silica particles of claim 6, wherein the particles comprise a total porosity of at least 1.7 $cm^3$/g of pore volume, as measured by BJH nitrogen porosimetry.

9. The silica particles of claim 1, wherein the silica particle-forming reagents comprise alkali metal silicate and sulfuric acid.

10. The silica particles of claim 9, wherein said mixing under high shear comprises utilizing a high shear disintegrator in a bypass mode to circulate the silica particle-forming reagents through the reaction vessel and the high shear disintegrator.

11. The silica particles of claim 1, wherein the first length of time is 13 minutes, the second length of time is 90 minutes, and the third length of time is 43 minutes.

12. Use of the silica particles of claim 1 as a filtering agent in beer stabilization.

**Patentansprüche**

1. Poröse Kieselsäurepartikel, gebildet durch ein Verfahren, das die folgenden Schritte umfasst::

Bilden von gefällten Kieselsäurepartikeln in einem Reaktionsgemisch während des Mischens unter hohen Scherkräften;
Abtrennen der gefällten Kieselsäurepartikel von der Flüssigkeit im Reaktionsgemisch;
Waschen der gefällten durch ein Verfahren, um gewaschene gefällte durch ein Verfahren herzustellen; und
schnelles Trocknen der gewaschenen gefällten durch ein Verfahren zur Bildung getrockneter poröser durch ein Verfahren,
wobei der Bildungsschritt umfasst:

Einbringen von Kieselsäurepartikel bildenden Reagenzien in ein Reaktionsgefäß, wobei unter hohen Scherungsbedingungen für eine erste Zeitspanne gemischt wird, um ein erstes Reaktionsgemisch zu bilden;
im Anschluss an die erste Zeitspanne, Unterbrechen der Zufuhr von Kieselsäurepartikel bildenden Reagenzien in das Reaktionsgefäß, wobei das Mischen unter hoher Dispersionsscherkraft für eine zweite Zeitspanne fortgesetzt wird;
im Anschluss an die zweite Zeitspanne, Einbringen der Kieselsäurepartikel bildenden Reagenzien in das Reaktionsgefäß während des Mischens unter hohen Scherungsbedingungen für eine dritte Zeitspanne, um ein zweites Reaktionsgemisch zu bilden; und
im Anschluss an die dritte Zeitspanne, Säuern des zweiten Reaktionsgemischs unter hoher Scherdispersionskraft, um den pH-Wert des zweiten Reaktionsgemischs auf etwa 4,0 zu senken, um ein drittes Reaktionsgemisch zu bilden,
wobei die erste Zeitspanne weniger als 15 Minuten, die zweite Zeitspanne weniger als 120 Minuten und die dritte Zeitspanne weniger als 45 Minuten beträgt, und

wobei das Verfahren weiterhin umfasst:
Mahlen oder Klassifizieren der getrockneten porösen Kieselsäurepartikel zur Bildung poröser Kieselsäurepartikel mit einer durchschnittlichen Teilchengröße von weniger als 30 Mikron,
wobei die gemahlenen oder klassifizierten Kieselsäurepartikel aufweisen:

(a) eine Einzelpunkt-Stickstoffadsorptionsfläche von mindestens 650 $m^2/g$;
(b) eine DOA-Ölabsorptionszahl von mindestens 260 ml/100g, und
(c) eine Partikelstabilität von mindestens etwa 90%, gemessen mit der Methode des Partikelstabilitätstests, wobei der Partikelstabilitätsindex der Quotient der mittleren Partikelgröße aus zwei Partikelgrößenmessungen an derselben Probe gemäß ISO/FSD 13320-1 ist, und die Probenvorbereitung mit zwei unterschiedlichen Intensitäten der Ultraschallvorbehandlung durchgeführt wird, wobei 1 g Siliciumdioxid in ein 150 ml Becherglas gegeben wird, 100 bis 120 ml entsalztes Wasser dazugegeben werden, die Spitze des Ultraschallresonators 2 cm in die Flüssigkeit und in die Mitte des Becherglases eingetaucht wird, die Beschallung mit einer Leistungseinstellung von 55% für 10 s für Messung 1 und 60 s für Messung 2 durchgeführt wird und der Partikelstabilitätsindex wie folgt berechnet wird:

$$\text{Stabilitätsindex } [\%] = (d0,5_{60s})/(d0,5_{10s}) * 100.$$

2. Kieselsäurepartikel nach Anspruch 1, wobei die Kieselsäurepartikel eine Porosität aufweisen, so dass mindestens

0,5 cm$^3$/g des Porenvolumens, gemessen mittels BJH-Stickstoffporosimetrie, aus Poren mit einer Porengröße von 10 nm (100 Å) oder weniger stammt, wobei die Porosität der Partikel nach Trocknen der Partikel bei 200°C für mindestens 2 Stunden, gefolgt von einer Aktivierung bei 200°C für zwei Stunden unter Vakuum, gemessen wird.

3. Kieselsäurepartikel nach Anspruch 1, wobei die Partikel eine mittlere Teilchengröße im Bereich von 1 bis 30 Mikrometer aufweisen.

4. Kieselsäurepartikel nach Anspruch 3, wobei die Partikel umfassen:

(a) eine Einzelpunkt-Stickstoffadsorptionsfläche von 650 bis 1000 m$^2$/g; und
(b) eine DOA-Ölabsorptionszahl von 260 bis 400 mL/100g.

5. Kieselsäurepartikel nach Anspruch 3, wobei die Partikel umfassen:

(a) eine Einzelpunkt-Stickstoffadsorptionsfläche von 660 bis 900 m$^2$/g und
(b) eine DOA-Ölabsorptionszahl von 260 bis 380 mL/100g.

6. Kieselsäurepartikel nach Anspruch 3, wobei die Partikel eine Porosität aufweisen, so dass mindestens 0,6 cm$^3$/g des Porenvolumens, gemessen mittels BJH-Stickstoffporosimetrie, aus Poren mit einer Porengröße von 16 nm (160 Å) oder weniger stammt, wobei die Porosität der Partikel nach Trocknen der Partikel bei 200°C für mindestens 2 Stunden, gefolgt von einer Aktivierung bei 200°C für zwei Stunden unter Vakuum, gemessen wird.

7. Kieselsäurepartikel nach Anspruch 6, wobei die Partikel eine Gesamtporosität von mindestens 1,5 cm$^3$/g Porenvolumen aufweisen, gemessen mittels BJH-Stickstoffporosimetrie.

8. Kieselsäurepartikel nach Anspruch 6, wobei die Partikel eine Gesamtporosität von mindestens 1,7 cm$^3$/g Porenvolumen aufweisen, gemessen mittels BJH-Stickstoffporosimetrie.

9. Kieselsäurepartikel nach Anspruch 1, wobei die Kieselsäurepartikel bildenden Reagenzien Alkalimetallsilikat und Schwefelsäure umfassen.

10. Kieselsäurepartikel nach Anspruch 9, wobei das Mischen unter hohen Scherungsbedingungen die Verwendung eines Hochscher-Desintegrators in einem Bypass-Modus umfasst, um die Kieselsäurepartikel bildenden Reagenzien durch das Reaktionsgefäß und den Desintegrator mit hoher Scherung zu zirkulieren.

11. Kieselsäurepartikel nach Anspruch 1, wobei die erste Zeitdauer 13 Minuten, die zweite Zeitdauer 90 Minuten und die dritte Zeitdauer 43 Minuten beträgt.

12. Verwendung der Kieselsäurepartikel gemäß Anspruch 1 als Filtermittel bei der Bierstabilisierung.

## Revendications

1. Particules de silice poreuse formées par une méthode comprenant les étapes suivantes :

formation des particules de silice précipitées dans un mélange réactionnel lors d'un mélange dans des conditions de cisaillement élevé ;
séparation des particules de silice précipitées du liquide contenu dans le mélange réactionnel;
lavage des particules de silice précipitées pour produire des particules de silice précipitées lavées; et
séchage rapide des particules de silice précipitées lavées pour former des particules de silice poreuses séchées, dans laquelle ladite étape de formation comprend :

introduire des réactifs formant des particules de silice dans une cuve de réaction, tout en mélangeant dans des conditions de cisaillement élevé, pendant une première période de temps de manière à obtenir un premier mélange réactionnel;
après la première période de temps, arrêter l'introduction des réactifs formant des particules de silice dans la cuve de réaction tout en poursuivant le mélange sous une force de dispersion à cisaillement élevé pendant une deuxième période de temps;

après la deuxième période de temps, introduire les réactifs de formation de particules de silice dans la cuve de réaction, tout en mélangeant sous un cisaillement élevé, pendant une troisième période de temps de manière à obtenir un deuxième mélange réactionnel; et

après la troisième période de temps, acidifier le deuxième mélange réactionnel sous une force de dispersion à cisaillement élevé de manière à réduire le pH du deuxième mélange réactionnel à environ 4,0, pour former un troisième mélange réactionnel,

dans lequel la première période de temps est inférieure à 15 minutes, la deuxième période de temps est inférieure à 120 minutes et la troisième période de temps est inférieure à 45 minutes, et

dans laquelle la méthode comprend en outre

broyer ou classer lesdites particules de silice poreuse séchées pour former des particules de silice poreuse dont la taille moyenne est inférieure à 30 microns,

lesdites particules de silice broyées ou classées ayant :

(a) une surface d'adsorption d'azote en un seul point d'au moins 650 m$^2$/g ;

(b) un indice d'absorption de l'huile DOA d'au moins 260 mL/100g, et

(c) une stabilité des particules d'au moins 90% environ, mesurée par la méthode du test de stabilité des particules, l'indice de stabilité des particules étant le quotient de la taille médiane des particules à partir de deux mesures de la taille des particules sur le même échantillon conformément à la norme ISO/FSD 13320-1, et la préparation de l'échantillon est effectuée avec deux intensités différentes de prétraitement ultrasonique, dans lequel 1 g de silice est placé dans un bécher de 150 ml, 100 à 120 ml d'eau désionisée y sont ajoutés, la pointe du résonateur ultrasonique est immergée à 2 cm dans le fluide et au centre du bécher, la sonification est effectuée avec une puissance de 55% pendant 10 s pour la mesure 1 et 60 s pour la mesure 2, et l'indice de stabilité des particules est calculé de la manière suivante:

$$\text{Indice de stabilité } [\%] = (d0{,}5_{60s})/(d0{,}5_{(10s)}) * 100.$$

2. Particules de silice selon la revendication 1, lesdites particules de silice ayant une porosité telle qu'au moins 0,5 cm$^3$/g de volume de pore, mesuré par porosimétrie à l'azote BJH, provient de pores ayant une taille de pore de 10 nm (100 Å) ou moins, la porosité des particules étant mesurée après séchage des particules à 200°C pendant au moins 2 heures, suivi d'une activation à 200°C pendant 2 heures sous vide.

3. Particules de silice selon la revendication 1, lesdites particules de silice ayant une taille médiane comprise entre 1 et 30 microns.

4. Particules de silice selon la revendication 3, dans lesquelles les particules comprennent:

(a) une surface d'adsorption de l'azote en un seul point de 650 à 1000 m$^2$/g ; et

(b) un indice d'absorption de l'huile DOA compris entre 260 et 400 mL/100 g.

5. Particules de silice de la revendication 3, dans lesquelles les particules comprennent:

(a) une surface d'adsorption de l'azote en un seul point comprise entre 660 et 900 m$^2$/g; et

(b) un indice d'absorption de l'huile DOA compris entre 260 et 380 mL/100g.

6. Particules de silice selon la revendication 3, dans lesquelles les particules présentent une porosité telle qu'au moins 0,6 cm$^3$/g de volume de pore, mesuré par porosimétrie à l'azote BJH, provient de pores dont la taille est inférieure ou égale à 16 nm (160 Å), la porosité des particules étant mesurée après séchage des particules à 200°C pendant au moins 2 heures, suivi d'une activation à 200°C pendant 2 heures sous vide.

7. Particules de silice selon la revendication 6, dans lesquelles les particules présentent une porosité totale d'au moins 1,5 cm$^3$/g de volume de pore, mesurée par porosimétrie à l'azote BJH.

8. Particules de silice selon la revendication 6, dans lesquelles les particules présentent une porosité totale d'au moins 1,7 cm$^3$/g de volume de pore, mesurée par porosimétrie à l'azote BJH.

9. Particules de silice selon la revendication 1, dans lesquelles les réactifs de formation des particules de silice comprennent du silicate de métal alcalin et de l'acide sulfurique.

10. Particules de silice selon la revendication 9, dans laquelle ledit mélange sous cisaillement élevé comprend l'utilisation d'un désintégrateur à cisaillement élevé en mode de dérivation pour faire circuler les réactifs de formation de particules de silice à travers la cuve de réaction et le désintégrateur à cisaillement élevé.

11. Particules de silice selon la revendication 1, dans lesquelles la première période de temps est de 13 minutes, la deuxième période de temps est de 90 minutes, et la troisième période de temps est de 43 minutes.

12. Utilisation des particules de silice selon la revendication 1 comme agent filtrant dans la stabilisation de la bière.

**FIG. 1**

```
        ┌─────────────────┐
        │     Start       │
        │   (step 10)     │
        └────────┬────────┘
                 │
                 ▼
        ┌─────────────────┐
        │   Fill Reactor  │
        │   (step 12)     │
        └────────┬────────┘
                 │
                 ▼
        ┌─────────────────┐
        │      1st        │
        │  Precipitation  │
        │   (step 14)     │
        └────────┬────────┘
                 │
                 ▼
        ┌─────────────────┐
        │   Shear phase   │
        │   (step 16)     │
        └────────┬────────┘
                 │
                 ▼
        ┌─────────────────┐
        │      2nd        │
        │  Precipitation  │
        │   (step 18)     │
        └────────┬────────┘
                 │
                 ▼
        ┌─────────────────┐
        │  Acidification  │
        │   (step 20)     │
        └────────┬────────┘
                 │
                 ▼
        ┌─────────────────┐
        │  Filtration and │
        │      wash       │
        │ (steps 22+24)   │
        └────────┬────────┘
                 │
                 ▼
        ┌─────────────────┐          ┌─────────────────┐
        │  Rapid drying   │─────────▶│     Milling     │
        │   (step 26)     │◀─────────│   (step 30)     │
        └────────┬────────┘          └────────┬────────┘
                 │                            │
                 ▼                            ▼
        ┌─────────────────┐          ┌─────────────────┐
        │     Use in      │          │ Classification  │
        │   application   │◀─────────│   (step 32)     │
        │   (step 28)     │          └─────────────────┘
        └─────────────────┘
```

# FIG. 2

EP 3 456 686 B1

**EP 3 456 686 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5643624 A
- US 20080153694 A1
- DE 1006100
- DE 1592865
- US 5221337 A
- US 6294505 B